(19) Europäisches Patentamt / European Patent Office / Office européen des brevets

(11) **EP 2 992 640 B1**

(12) **FASCICULE DE BREVET EUROPEEN**

(45) Date de publication et mention de la délivrance du brevet:
**27.05.2020 Bulletin 2020/22**

(21) Numéro de dépôt: **14720081.0**

(22) Date de dépôt: **23.04.2014**

(51) Int Cl.:
*G06F 21/32* (2013.01)     *H04L 9/32* (2006.01)
*G07F 7/10* (2006.01)     *H04L 9/08* (2006.01)
*G06F 21/34* (2013.01)     *G06Q 20/40* (2012.01)

(86) Numéro de dépôt international:
**PCT/EP2014/058284**

(87) Numéro de publication internationale:
**WO 2014/177444 (06.11.2014 Gazette 2014/45)**

(54) **PROCÉDÉ POUR GÉNÉRER AU MOINS UNE IDENTITÉ DÉRIVÉE**

VERFAHREN ZUR ERZEUGUNG VON MINDESTENS EINER ABGELEITETEN IDENTITÄT

METHOD FOR GENERATING AT LEAST ONE DERIVED IDENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2013 FR 1354006**

(43) Date de publication de la demande:
**09.03.2016 Bulletin 2016/10**

(73) Titulaire: **Idemia Identity & Security France**
**92400 Courbevoie (FR)**

(72) Inventeurs:
• **DIDIER, Bernard**
  **92400 COURBEVOIE (FR)**
• **CHABANNE, Hervé**
  **92400 COURBEVOIE (FR)**
• **BRINGER, Julien**
  **92400 COURBEVOIE (FR)**

(74) Mandataire: **Lavialle, Bruno François Stéphane et al**
**Cabinet Boettcher**
**16, rue Médéric**
**75017 Paris (FR)**

(56) Documents cités:
**WO-A1-2010/099473     WO-A2-03/065169**

• **OMAR S ET AL: "Multi-purpose student card system using smart card technology", INFORMATION TECHNOLOGY BASED HIGHER EDUCATION AND TRAINING, 2004. ITHE T 2004. PROCEEDINGS OF THE FIFTH INTERNATIONAL CONFERENCE ON ISANBUL, TURKEY 31 MAY - 2 JUNE 2004, PISCATAWAY, NJ, USA,IEEE, 31 mai 2004 (2004-05-31), pages 527-532, XP010741746, DOI: 10.1109/ITHET.2004.1358229 ISBN: 978-0-7803-8596-2**
• **MARYAM SAVARI ET AL: "Combining encryption methods in multipurpose smart card", CYBER SECURITY, CYBER WARFARE AND DIGITAL FORENSIC (CYBERSEC), 2012 INTERNATIONAL CONFERENCE ON, IEEE, 26 juin 2012 (2012-06-26), pages 43-48, XP032207597, DOI: 10.1109/CYBERSEC.2012.6246120 ISBN: 978-1-4673-1425-1**

**Description**

L'invention concerne un procédé permettant de générer au moins une identité dérivée d'un individu.

ARRIERE PLAN DE L'INVENTION

Chaque individu est aujourd'hui en possession d'un certain nombre de « cartes » très diverses, par exemple une carte d'identité, une carte bancaire, une carte de sécurité sociale, etc., qui peuvent toutes être caractérisées d'une part, par une fonction qu'elles remplissent, et d'autre part, par un dispositif de reconnaissance d'individu qu'elles mettent en œuvre. Ainsi, une carte d'identité traditionnelle permet à un individu de prouver son identité lors d'un contrôle, à condition que le tiers effectuant le contrôle reconnaisse l'individu grâce à une photographie sur la carte. De même, une carte bancaire permet à un individu d'effectuer des achats, à condition que l'individu soit en mesure de fournir un code confidentiel associé à la carte bancaire.

Il est de plus en plus envisagé de remplacer les dispositifs de reconnaissance traditionnels par des moyens de reconnaissance biométrique. On munit alors la carte d'une puce contenant des données biométriques de l'individu préalablement acquises et représentatives d'une caractéristique physique de l'individu (empreintes digitales, rétine ou iris d'un oeil, etc.). Lorsque l'individu présente une telle carte, la reconnaissance de l'individu s'effectue en acquérant à nouveau les données biométriques de l'individu, et en les comparant avec celles de la carte. Par exemple, le passeport biométrique français stocke des données représentatives de deux empreintes digitales d'un individu.

L'intérêt des données biométriques pour la fiabilité de la reconnaissance et pour la sécurité des personnes est indéniable.

Il est aussi envisagé d'utiliser les données biométriques présentes sur une seule carte pour effectuer des fonctions différentes, ou accéder à des services différents. On pourrait ainsi imaginer que des données biométriques, stockées dans une carte d'identité, puissent permettre à un individu d'accéder à différents services publics, comme la sécurité sociale, l'administration fiscale, etc. Une fois encore, l'intérêt pour la fiabilité de l'authentification et pour la simplification de la gestion des moyens d'identification est incontestable. Cependant, cette carte d'identité serait alors le vecteur d'une identité unique permettant l'accès à des données de l'individu associées à son utilisation de ces différents services, ce qui peut poser un certain nombre de problèmes relatifs à la protection des données personnelles des personnes.

Il serait donc particulièrement intéressant de réussir à exploiter les données biométriques pour reconnaître un individu de manière à lui faciliter un accès à un service, sans qu'il soit possible, à partir des données stockées chez le fournisseur du service, d'identifier l'individu en question.

Le document WO 03/065169 fait partie de l'état de l'art pertinent.

OBJET DE L'INVENTION

L'invention a pour objet de répondre au problème soulevé ci-dessus.

RESUME DE L'INVENTION

En vue de la réalisation de ce but, on propose un procédé pour générer au moins une identité dérivée d'un individu tel que défini dans la revendication indépendante 1. Le fournisseur de service peut ainsi accéder aux données personnelles de l'individu sans stocker l'identité de cet individu, et sans accéder aux données biométriques de celui-ci.

L'invention sera mieux comprise à la lumière de la description qui suit d'un mode de mise en œuvre particulier non limitatif de l'invention.

BREVE DESCRIPTION DES DESSINS

Il sera fait référence aux dessins annexés, parmi lesquels :

- la figure 1 représente schématiquement un utilisateur du procédé de l'invention ;
- la figure 2 représente schématiquement certaines étapes du procédé de l'invention ;
- les figures 3 et 4 représentent schématiquement respectivement un accès manuel et un accès à distance aux données personnelles de l'individu, au cours d'une mise en œuvre du procédé de l'invention.

DESCRIPTION DETAILLEE DE L'INVENTION

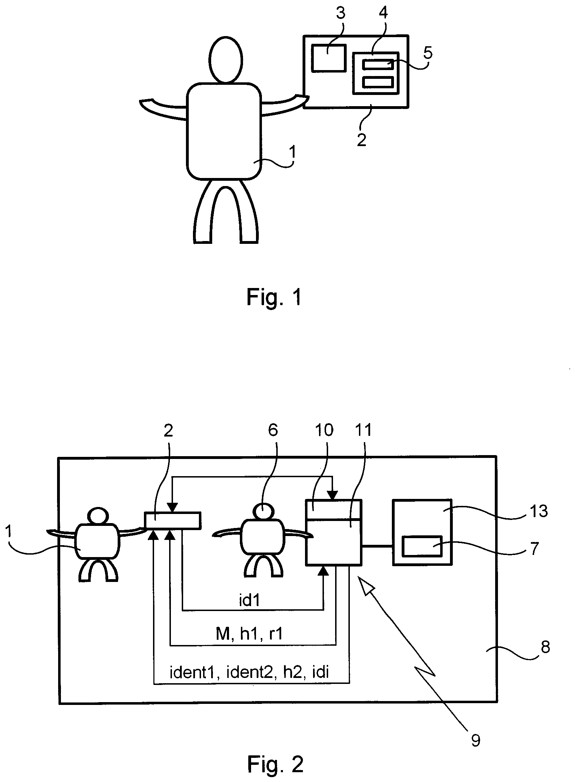

En référence aux figures 1 et 2, on décrit ici le procédé de l'invention appliqué au cas d'un individu 1, en l'occurrence un utilisateur 1 de la sécurité sociale française, qui doit pouvoir accéder aux différents services rendus par la sécurité sociale, par exemple au remboursement d'un soin médical. L'utilisateur 1 est porteur d'un support d'identification, ici une carte d'identité nationale 2 munie de premiers moyens de traitement 3 et de moyens de mémoire 4 dans lesquels sont stockées des données biométriques numériques 5 de l'utilisateur. Ces données biométriques numériques 5 sont ici représentatives de deux empreintes digitales de l'utilisateur, et ont été acquises puis stockées dans la carte d'identité 2 lors de la délivrance de celle-ci à l'utilisateur 1. Ainsi, il est possible, lors d'un contrôle quelconque (contrôle de police, etc.), de vérifier l'identité de l'utilisateur de manière très fiable, en acquérant ses empreintes digitales et en les comparant aux données biométriques 5 stockées dans la carte d'identité 2.

En plus de sa fonctionnalité première d'identification, la carte d'identité 2 est utilisée pour permettre à l'utilisateur 1 de bénéficier des services de la sécurité sociale, ce qui nécessite que l'utilisateur 1 lui-même, ou bien un opérateur 6 (fonctionnaire par exemple) de la sécurité sociale, aient accès à des données personnelles 7 de l'utilisateur, ces données personnelles 7 comprenant par exemple des données d'identification, des données à propos d'actes médicaux précédents, des données relatives à des conditions de remboursement particulières, etc.

Lorsque l'utilisateur 1 se présente dans des locaux 8 de la sécurité sociale, les données biométriques 5 correspondant aux empreintes digitales de l'utilisateur sont acquises, puis comparées à celles stockées dans les moyens de mémoire 4 de la carte d'identité 2. On peut imaginer qu'au sein de ces locaux 8 se trouve une borne d'accueil 9 comprenant des moyens d'acquisition biométrique 10 permettant de comparer les empreintes de l'utilisateur et les données biométriques 5 de la carte d'identité 2. Cette acquisition et cette comparaison permettent de vérifier que l'utilisateur 1 qui se présente est bien le porteur légitime de la carte d'identité 2, et donc d'identifier de manière sûre et fiable l'utilisateur 1. On précise ici que les moyens d'acquisition biométriques 10 sont totalement indépendants des autres moyens de la borne d'accueil 9, et ne transmettent aucune donnée à la sécurité sociale.

Le procédé de l'invention comporte tout d'abord une étape au cours de laquelle les premiers moyens de traitement 3 de la carte d'identité 2 génèrent un premier identifiant id1 à partir des données biométriques 5 de l'utilisateur 1 et d'au moins un paramètre de dérivation fourni par la sécurité sociale, et transmettent ce premier identifiant id1 à la sécurité sociale.

Concrètement, la borne d'accueil 9 des locaux 8 comporte, ou est reliée à, des deuxièmes moyens de traitement 11. Les deuxièmes moyens de traitement 11 transmettent à la carte d'identité 2 un premier paramètre de dérivation h1, un deuxième paramètre de dérivation r1 défini aléatoirement, et un troisième paramètre de dérivation ou module M. h1, r1 et M sont ici des entiers positifs. Les premiers moyens de traitement 3 de la carte d'identité 2 génèrent alors le premier identifiant id1, qui est obtenu à partir d'une fonction à sens-unique. Par fonction à sens-unique, on entend une fonction relativement facile à calculer, mais difficilement inversible en pratique. En l'occurrence, le premier identifiant id1 est ici obtenu par une exponentiation modulaire. Les premiers moyens de traitement définissent le premier identifiant id1 comme étant égal à $h1^{db.r1} \bmod M$, db étant une valeur numérique représentative des données biométriques de l'individu. Cette opération a pour but de crypter les données biométriques, ce cryptage des données biométriques étant bien sûr d'autant plus efficace que les entiers h1 et r1 sont élevés. Le premier identifiant crypté id1 est alors transmis aux deuxièmes moyens de traitement 11. Seul ce premier identifiant id1 est transmis par la carte d'identité 2 à la sécurité sociale, qui n'a donc aucun accès aux données biométriques 5 de l'utilisateur 1.

Le procédé de l'invention comporte ensuite une étape au cours de laquelle les deuxièmes moyens de traitement 11 génèrent un numéro de série ns associé à l'individu, puis une étape au cours de laquelle les deuxième moyens de traitement 11 génèrent une clé numérique cln leur permettant de retrouver les premier, deuxième et troisième paramètres de dérivation.

Puis, le procédé de l'invention comporte une étape au cours de laquelle sont générées des premières données de contrôle ctrl1, contenant le résultat d'un calcul de contrôle de cohérence (par exemple de type contrôle de parité, contrôle de redondance croisée, etc.) permettant de vérifier la cohérence du premier identifiant id1, du numéro de série ns et de la clé numérique cln.

Ensuite, le procédé de l'invention comporte une étape au cours de laquelle une première identité dérivée ident1 de l'individu est générée. Cette première identité dérivée ident1 résulte ici de la concaténation d'un premier champ de données contenant le numéro de série ns, d'un deuxième champ de données contenant le premier identifiant id1, d'un troisième champ de données contenant la clé numérique cln, et d'un quatrième champ de données contenant les premières données de contrôle ctrl1. La première identité dérivée se présente donc sous la forme suivante :

$$\mathtt{ident1 = ns \| id1 \| cln \| ctrl1} \ ,$$

le symbole "||" signifiant ici "concaténé à".

La première identité dérivée ident1 se présente sous la forme d'une succession de bits, le nombre de bits correspondant bien sûr à la taille des données de chacun des champs. L'ordre dans lequel sont agencés les champs est bien sûr donné uniquement à titre d'exemple.

La première identité dérivée ident1 est associée par la sécurité sociale aux données personnelles 7 de l'individu 1. Ainsi, la sécurité sociale comporte des moyens de stockage 13 adaptés à coopérer avec les deuxièmes moyens de traitement 11, dans lesquels sont stockées les données personnelles de tous les utilisateurs de la sécurité sociale, et notamment celles 7 de l'utilisateur.

Tout comme les exigences de sécurité et de fiabilité du cryptage, le nombre de bits total pouvant être mémorisé par les moyens de mémoire 4 de la carte d'identité 2 pour le service de sécurité sociale (la carte pouvant éventuellement être utilisée de la même manière pour d'autres services) peut être un élément déterminant pour dimensionner à la fois id1 et ident1. On peut prévoir par exemple d'utiliser 6 bits pour le premier identifiant id1, 6 bits pour le numéro de série ns, 6 bits pour la clé numérique cln et 4 bits pour le contrôle ctrl1.

Avantageusement, le procédé de l'invention comporte une étape au cours de laquelle les deuxièmes moyens de traitement 11 génèrent un deuxième identifiant trunc(id1), ce deuxième identifiant trunc(id1) étant le résultat d'une opération visant à réduire la taille du champs comprenant le premier identifiant id1, ainsi qu'une étape au cours de laquelle les deuxièmes moyens de traitement 11 génèrent des deuxièmes données de contrôle ctrl2 destinées à vérifier la cohérence du deuxième identifiant trunc(id1), du numéro de série ns et de la clé numérique cln. Une deuxième identité dérivée ident2 est alors constituée, par concaténation du numéro de série ns, du deuxième identifiant trunc(id1), de la clé cln et des deuxièmes données de contrôle ctrl2. La deuxième identité dérivée ident2 a ainsi la forme suivante :

$$\text{ident2} = \text{ns} \,\|\, \text{trunc(id1)} \,\|\, \text{cln} \,\|\, \text{ctrl2}.$$

L'utilité de la deuxième identité dérivée sera décrite plus tard.

Cette deuxième identité dérivée ident2 est fournie à l'utilisateur 1.

Outre la deuxième identité dérivée ident2, les deuxièmes moyens de traitement 11 transmettent à l'individu un quatrième paramètre de dérivation h2, tel que $h2 = g2^{s2}$, g2 étant un cinquième paramètre de dérivation et s2 un sixième paramètre de dérivation « privé », connu et mémorisé par la sécurité sociale. Les premiers moyens de traitement 3 de la carte d'identité 2 calculent alors une exponentiation modulaire, de manière à définir une identité statique idi telle que $idi = h2^{ident1} \bmod M'$, où M' est un module, dont l'utilité sera décrite plus tard.

Cette identité statique idi est stockée dans les moyens de mémoire 3 de la carte d'identité 2.

Une fois que la carte d'identité 2 a été activée, du moins en ce qui concerne sa fonctionnalité liée à l'accès aux services de la sécurité sociale, un accès réel peut être réalisé par l'utilisateur 1.

On distinguera dans la suite deux sortes d'accès : un accès dit « accès manuel », au cours duquel l'utilisateur accède au service désiré par l'intermédiaire de l'opérateur 6 de la sécurité social, et un accès dit « accès à distance », au cours duquel l'utilisateur accède au service à distance grâce à des moyens de communication à distance de type réseau internet ou réseau téléphonique.

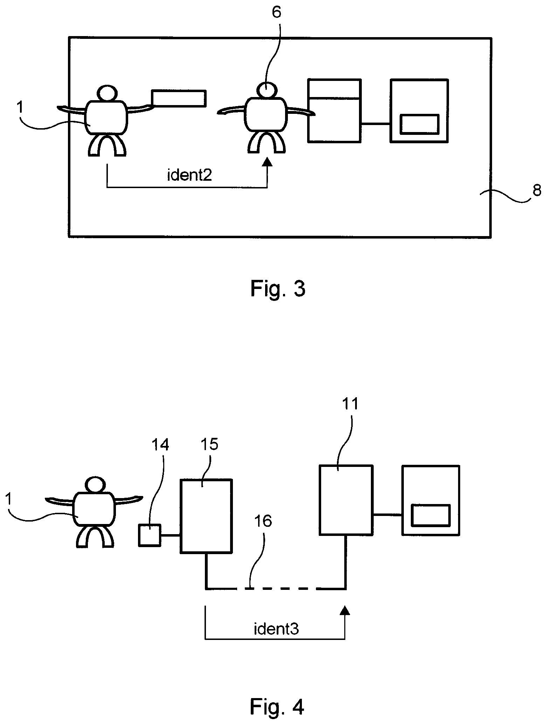

Lors d'un accès manuel, visible à la figure 3, l'utilisateur se présente dans les locaux 8 de la sécurité sociale et fournit à l'opérateur 6 de la sécurité sociale la deuxième identité dérivée ident2. L'opérateur 6 entre alors manuellement la deuxième identité dérivée ident2 dans des moyens d'interface, par exemple dans la borne d'accueil 9, adaptés à coopérer avec les deuxièmes moyens de traitement 11 de la sécurité sociale. Grâce à la deuxième identité dérivée ident2, les deuxièmes moyens de traitement 11 retrouvent la première identité dérivée ident1, à laquelle sont associées les données personnelles 7 de l'individu. Ces données personnelles 7 peuvent donc être retrouvées dans les moyens de stockage 13, et utilisées par la sécurité sociale ou par l'utilisateur lors de l'accès manuel de l'utilisateur 1.

Lors d'un accès à distance d'un utilisateur 1, visible à la figure 4, l'utilisateur étant par exemple connecté au site internet de la sécurité sociale, les données biométriques correspondant aux empreintes digitales de l'utilisateur 1 sont acquises, puis comparées à celles stockées dans les moyens de mémoire de la carte d'identité. Cette acquisition et cette comparaison sont effectuées par des moyens d'acquisition biométrique 14 détenus par l'utilisateur 1, par exemple de type lecteur USB (pour « Universal Serial Bus », ou, en français, « Bus Universel en Série ») biométrique, connectées à un équipement 15 (ordinateur, etc.) de l'utilisateur connecté au réseau internet 16. Si la comparaison est positive, la carte d'identité 2 définit un septième paramètre de dérivation r2 aléatoire et caractéristique du présent accès à distance. La carte d'identité 2 reçoit en outre de la sécurité sociale un huitième paramètre de dérivation c dépendant de la transaction et/ou du service rendu par la sécurité sociale au moment de la transaction. La carte d'identité calcule ensuite une troisième identité dérivée ou identité dynamique ident3 formée par un premier terme d'identification de la forme $a = g2^{r2}$ et par un deuxième terme d'identification de la forme $b = h2^{(r2+c).ident1} = idi^{r2+c}$. La troisième identité dérivée ident3 est recalculée à chaque accès à distance de l'utilisateur. Cette troisième identité dynamique ident3 est transmise via le réseau internet 16 à la sécurité sociale et aux deuxièmes moyens de traitement 11. Cette troisième identité dynamique ident3 est directement issue de l'identité statique idi et donc de la première identité dérivée ident1. Pour vérifier l'intégrité de la troisième identité dérivée ident3, les deuxièmes moyens de traitement 11 vérifient que $(a.g2^{c})^{s2.ident1} = b$. Grâce à cette troisième identité dérivée ident3, les deuxièmes moyens de traitement 11 retrouvent la première identité dérivée ident1, à laquelle sont associées les données personnelles 7 de l'individu 1. Ces données personnelles 7 peuvent donc être utilisées par la sécurité sociale lors de l'accès de l'utilisateur 1, et éventuellement être transmises à l'utilisateur 1 lui-même.

Ainsi, aussi bien pour l'accès manuel que pour l'accès à distance, une identité dérivée manuelle ou dynamique est générée à partir de la première identité dérivée ident1, soit par la sécurité sociale (c'est le cas d'ident2), soit par la carte elle-même (c'est le cas d'ident3). Ces identités dérivées permettent d'accéder aux données personnelles 7 de l'individu 1 sans utiliser aucune information propre à l'identité réelle de l'utilisateur 1 ou à ses données biométriques 5.

Seul l'utilisateur 1, grâce à sa carte d'identité 2, est donc en mesure d'accéder à ses données personnelles 7, ou de permettre à des moyens de traitement ou à un opérateur 6 de la sécurité sociale d'accéder à ces données personnelles, les moyens de traitement ou l'opérateur 6 ne pouvant pas identifier l'utilisateur à partir de ces données personnelles.

On peut par ailleurs supposer que l'Etat français possède des fichiers biométriques avec des liens faibles vers des identités d'individus. En cas de problème (soupçon de fraude par usurpation d'identité par exemple), la sécurité sociale pourra vérifier si l'individu qui a accédé aux données est bien l'individu autorisé.

L'invention n'est pas limitée au mode de mise en oeuvre particulier qui vient d'être décrit, mais, bien au contraire, couvre toute variante entrant dans le cadre de l'invention telle que définie par les revendications.

Bien que l'on ait choisi d'utiliser la carte d'identité comme support adapté à coopérer avec la sécurité sociale, il aurait bien sûr été possible de choisir un support d'identification différent, comme un terminal électronique, un téléphone portable, un passeport...contenant des données biométriques de l'individu.

Bien que l'on ait défini la sécurité sociale comme unique fournisseur de service avec lequel la carte d'identité est adaptée à coopérer, il est bien sûr possible de prévoir que celle-ci puisse permettre un accès aux services de différents fournisseurs.

Bien que l'on ait indiqué que la première identité dérivée résulte de la concaténation d'un premier champ de données contenant le numéro de série, d'un deuxième champ de données contenant le premier identifiant, d'un troisième champ de données contenant la clé numérique, et d'un quatrième champ de données contenant les premières données de contrôle, la première identité dérivée peut parfaitement ne pas être formée de la totalité de ces champs de données, mais de certains de ces champs de données seulement.

## Revendications

1.  Procédé pour générer au moins une identité dérivée d'un individu (1) pouvant être associée par un fournisseur de service à des données personnelles de l'individu, le procédé comportant les étapes :

    - de faire générer, par un support d'identification (2) détenu par l'individu, un premier identifiant (id1) à partir de données biométriques (5) de l'individu ;
    - de faire définir, par des moyens de traitement du fournisseur de service, un numéro de série (ns) associé à l'individu ;
    - de faire générer, par les moyens de traitement du fournisseur de service, des premières données de contrôle (ctrl1) destinées à vérifier la cohérence du premier identifiant (id1) et du numéro de série (ns) ;
    - de faire concaténer, par les moyens de traitement du fournisseur de service , le numéro de série (ns), le premier identifiant (id1) et les premières données de contrôle (ctrl1) de manière à former une première identité dérivée (ident1) de l'individu, dans lequel, lorsque le fournisseur de service facilite un accès à un service à l'individu en utilisant la première identité dérivée, le fournisseur de service ne peut pas identifier l'individu à partir de données personnelles de l'individu stockées dans des moyens de stockage du fournisseur de service adaptés à coopérer avec les moyens de traitement du fournisseur de service.

2.  Procédé selon la revendication 1, dans lequel le premier identifiant est généré à partir d'au moins un paramètre de dérivation.

3.  Procédé selon la revendication 2, comportant en outre une étape consistant à définir une clé numérique (cln) permettant de retrouver le paramètre de dérivation, la première identité dérivée étant formée par concaténation du numéro de série (ns), du premier identifiant (id1), des premières données de contrôle (ctrl1) et de la clé numérique (cln).

4.  Procédé selon l'une des revendications précédentes, dans lequel le premier identifiant (id1) est obtenu à partir d'une fonction à sens-unique.

5.  Procédé selon l'une des revendications 3 à 4, dans lequel le premier identifiant est le résultat d'une exponentiation modulaire de type $h1^{db.r1}$ mod M, où h1 est un premier paramètre de dérivation, r1 est un deuxième paramètre de dérivation défini aléatoirement, M est un troisième paramètre de dérivation ou module, db est une valeur numérique représentative des données biométriques (5) de l'utilisateur, et dans lequel la clé numérique (cln) permet de retrouver les premier, deuxième et troisième paramètres.

6. Procédé selon l'une des revendications 3 à 5, comportant en outre les étapes :

- de générer un deuxième identifiant (trunc(id1)) issu d'une réduction de la taille du premier identifiant (id1) ;
- de générer des deuxièmes données de contrôle (ctrl2) destinées à vérifier la cohérence du deuxième identifiant, du numéro de série et de la clé numérique ;
- de concaténer le numéro de série, le deuxième identifiant, la clé numérique et les deuxièmes données de contrôle de manière à constituer une deuxième identité dérivée (ident2) de l'individu.

7. Procédé selon la revendication 6, dans lequel la deuxième identité dérivée (ident2) est destinée à accéder manuellement à des données personnelles de l'utilisateur stockées par un fournisseur d'un service.

8. Procédé selon la revendication 7, comportant en outre une étape consistant à générer une identité statique (idi) de la forme $h2^{ident1}$ mod M', où ident1 est la première identité dérivée, h2 est un quatrième paramètre de dérivation, et M' est un module.

9. Procédé selon l'une des revendications précédentes, comportant en outre l'étape de générer une troisième identité dérivée (ident3) ou identité dérivée dynamique, l'identité dérivée dynamique étant formée par un premier terme d'identification de la forme $a = g2^{r2}$ et par un deuxième terme d'identification de la forme $b=h2^{(r2+c).ident1}$, avec $g2^{s2}$ = h2, ident1 étant la première identité dérivée, h2 étant le quatrième paramètre de dérivation, g2 et s2 étant des cinquième et sixième paramètres de dérivation , r2 un septième paramètre de dérivation aléatoire, et c un huitième paramètre de dérivation .

10. Procédé selon la revendication 9, comportant en outre une étape au cours de laquelle il est vérifié que $(a.g2^c)^{s2.ident1}$ = b.

11. Procédé selon l'une des revendications 9 et 10, dans lequel la troisième identité dérivée est destinée à accéder à distance aux données personnelles de l'utilisateur stockées par le fournisseur du service, et dans lequel la troisième identité dérivée (ident3) est recalculée à chaque accès de l'utilisateur à ses données personnelles.

12. Procédé selon l'une des revendications précédentes, dans lequel le premier identifiant (id1) et/ou la troisième identité dérivée (ident3) et/ou l'identité statique (idi) est généré par un support d'identification détenu (2) par l'individu et contenant les données biométriques de l'individu.

13. Procédé selon la revendication 12, dans lequel le premier identifiant (id1) et/ou la troisième identité dérivée (ident3) et/ou l'identité statique (idi) est stocké dans le support d'identification.

14. Procédé selon l'une des revendications 12 ou 13, comprenant en outre une étape au cours de laquelle on vérifie l'identité de l'utilisateur en acquérant des données biométriques de l'utilisateur et en les comparant aux données biométriques stockées dans le support d'identification.

**Patentansprüche**

1. Verfahren zum Erzeugen mindestens einer abgeleiteten Identität eines Individuums (1), die von einem Diensteanbieter mit persönlichen Daten des Individuums in Verbindung gebracht werden kann, wobei das Verfahren die Schritte umfasst:

- Erzeugen einer ersten Kennung (id1) anhand von biometrischen Daten (5) des Individuums mittels eines Identifikationsträgers (2), der im Besitz des Individuums ist;
- Definieren einer mit dem Individuum verbundenen Seriennummer (ns) durch Verarbeitungsmittel des Diensteanbieters;
- Erzeugen durch die Verarbeitungsmittel des Diensteanbieters von ersten Kontrolldaten (ctrl1), die dazu bestimmt sind, die Kohärenz der ersten Kennung (id1) und der Seriennummer (ns) zu verifizieren;

- Verketten der Seriennummer (ns), der ersten Kennung (id1) und der ersten Kontrolldaten (ctrl1) durch die Verarbeitungsmittel des Diensteanbieters derart, dass eine erste abgeleitete Identität (ident1) des Individuums gebildet wird,

wobei, wenn der Diensteanbieter dem Individuum einen Zugriff auf einen Dienst ermöglicht, indem die erste abgeleitete Identität verwendet wird, der Diensteanbieter das Individuum nicht anhand der persönlichen Daten des Individuums identifizieren kann, die in den Speichermitteln des Diensteanbieters, die dazu geeignet sind, mit den Verarbeitungsmitteln des Diensteanbieters zusammenzuarbeiten, gespeichert sind.

2. Verfahren nach Anspruch 1, bei dem die erste Kennung anhand mindestens eines Ableitungsparameters erzeugt wird.

3. Verfahren nach Anspruch 2, ferner umfassend einen Schritt, der darin besteht, einen digitalen Schlüssel (ein) zu definieren, der es ermöglicht, den Ableitungsparameter zu finden, wobei die erste abgeleitete Identität aus der Verkettung der Seriennummer (ns), der ersten Kennung (id1), der ersten Kontrolldaten (ctrl1) und des digitalen Schlüssels (cln) gebildet wird.

4. Verfahren nach einem der vorhergehenden Ansprüche, bei dem die erste Kennung (id1) aus einer Einwegfunktion erhalten wird.

5. Verfahren nach einem der Ansprüche 3 bis 4, bei dem die erste Kennung das Ergebnis einer modularen Potenzierung vom Typ $h1^{db.r1} \bmod M$ ist, wobei h1 ein erster Ableitungsparameter ist, r1 ein zufällig definierter zweiter Ableitungsparameter ist, M ein dritter Ableitungsparameter oder Modul ist, db ein Zahlenwert ist, der repräsentativ für biometrische Daten (5) des Nutzers ist, und bei dem der digitale Schlüssel (cln) ein Finden des ersten, zweiten und dritten Parameters ermöglicht.

6. Verfahren nach einem der Ansprüche 3 bis 5, ferner umfassend die Schritte:

- Erzeugen einer zweiten Kennung (trunc(id1)), die aus einer Reduzierung der Größe der ersten Kennung (id1) stammt;
- Erzeugen von zweiten Kontrolldaten (ctrl2), die dazu bestimmt sind, die Kohärenz der zweiten Kennung, der Seriennummer und des digitalen Schlüssels zu verifizieren;
- Verketten der Seriennummer, der zweiten Kennung, des digitalen Schlüssels und der zweiten Kontrolldaten derart, dass eine zweite abgeleitete Identität (ident2) des Individuums gebildet wird.

7. Verfahren nach Anspruch 6, bei dem die zweite abgeleitete Identität (ident2) dazu bestimmt ist, manuell auf von einem Anbieter eines Dienstes gespeicherte persönliche Daten des Nutzers zuzugreifen.

8. Verfahren nach Anspruch 7, ferner umfassend einen Schritt, der darin besteht, dass eine statische Identität (idi) der Form $h2^{ident1} \bmod M'$ erzeugt wird, wobei ident1 die erste abgeleitete Identität ist, h2 ein vierter Ableitungsparameter ist und M' ein Modul ist.

9. Verfahren nach einem der vorhergehenden Ansprüche, ferner umfassend den Schritt des Erzeugens einer dritten abgeleiteten Identität (ident3) oder dynamischen abgeleiteten Identität, wobei die dynamische abgeleitete Identität von einem ersten Identifikationsterm der Form $a = g2^{r2}$ und von einem zweiten Identifikationsterm der Form $b = h2^{(r2+c).ident1}$ gebildet wird, mit $g2^{s2} = h2$, wobei ident1 die erste abgeleitete Identität ist, h2 der vierte Ableitungsparameter ist, g2 und s2 der fünfte und sechste Ableitungsparameter sind, r2 ein zufälliger siebter Ableitungsparameter und c ein achter Ableitungsparameter ist.

10. Verfahren nach Anspruch 9, ferner umfassend einen Schritt, während dessen verifiziert wird, dass $(a.g2^c)^{s2.ident1} = b$.

11. Verfahren nach einem der Ansprüche 9 und 10, bei dem die dritte abgeleitete Identität für einen Fernzugriff auf von dem Diensteanbieter gespeicherte persönliche Daten des Nutzers bestimmt ist, und bei dem die dritte abgeleitete Identität (ident3) bei jedem Zugriff des Nutzers auf seine persönlichen Daten erneut berechnet wird.

12. Verfahren nach einem der vorhergehenden Ansprüche, bei dem die erste Kennung (id1) und/oder die dritte abgeleitete Kennung (ident3) und/oder die statische Identität (idi) mittels eines Identifikationsträgers (2) erzeugt wird, der im Besitz des Individuums ist und die biometrischen Daten des Individuums enthält.

**13.** Verfahren nach Anspruch 12, bei dem die erste Kennung (id1) und/oder die dritte abgeleitete Identität (ident3) und/oder die statische Identität (idi) in dem Identifikationsträger gespeichert ist.

**14.** Verfahren nach einem der Ansprüche 12 oder 13, ferner umfassend einen Schritt, während dessen man die Identität des Nutzers verifiziert, indem biometrische Daten des Nutzers erfasst und diese mit den biometrischen Daten, die in dem Identifikationsträger gespeichert sind, verglichen werden.

**Claims**

**1.** A method of generating at least one derived identity of an individual (1) which can be associated by a service supplier to personal data of the individual, the method comprising the following steps:

- generating a first identifier (id1) from biometric data (5) of the individual;
- defining a serial number (ns) associated with the individual;
- generating first check data (ctrl1) for verifying consistency between the first identifier (id1) and the serial number (ns); and
- concatenating the serial number (ns), the first identifier (id1), and the first check data (ctrll) in such a manner as to form a first derived identity (ident1) of the individual,

wherein, when the service supplier facilitates that the individual gaining access to a service using the first derived identity, it is not possible for the service supplier to identify the individual from personal data of the individual stored in storage means of the service supplier adapted to cooperate with the processing means of the service supplier.

**2.** A method according to claim 1, wherein the first identifier is generated from at least one derivation parameter.

**3.** A method according to claim 2, further including a step consisting in defining a digital key (cln) serving to recover the derivation parameter, the first derived identity being formed by concatenating the serial number (ns), the first identifier (id1), first check data (ctrl1), and the digital key (cln).

**4.** A method according to any preceding claim, wherein the first identifier (id1) is obtained from a trapdoor function.

**5.** A method according to claim 3 or claim 4, wherein the first identifier is the result of modular exponentiation of the type $h1^{db.r1}$ mod M, where h1 is a first derivation parameter, r1 is a randomly defined second derivation parameter, M is a third derivation parameter or modulus, dB is a digital value representative of the user's biometric data (5), and wherein the digital key (cln) enables the first, second, and third parameters to be recovered.

**6.** A method according to any one of claims 3 to 5, further including the following steps:

- generating a second identifier (trunc(id1)) obtained by reducing the size of the first identifier (id1) ;
- generating second check data (ctrl2) for verifying consistency between the second identifier, the serial number, and the digital key; and
- concatenating the serial number, the second identifier, the digital key, and the second check data so as to constitute a second derived identity (ident2) of the individual.

**7.** A method according to claim 6, wherein the second derived identity (ident2) is for manually accessing personal data of the user stored by a service supplier.

**8.** A method according to claim 7, further including a step consisting in generating a static identity (idi) of the form $h2^{ident1}$ mod M', where ident1 is the first derived identity, h2 is a fourth derivation parameter, and M' is a modulus.

**9.** A method according to any preceding claim, further including the step of generating a third derived identity (ident3) or dynamic derived identity, the dynamic derived identity being formed by a first identification term of the form $a = g2^{r2}$ and by a second identification term of the form $b = h2^{(r2+c).ident1}$, with $g2^{s2} = h2$, ident1 being the first derived identity, h2 being the fourth derivation parameter, g2 and s2 being the fifth and sixth derivation parameters, r2 being a random seventh derivation parameter, and $\underline{c}$ being an eighth derivation parameter.

**10.** A method according to claim 9, further including a step during which it is verified that $(a.g2^c)^{s2.ident1} = b$.

**EP 2 992 640 B1**

**11.** A method according to claim 9 or claim 10, wherein the third derived identity is for remotely accessing the personal data of the user stored by the service supplier, and wherein the third derived identity (ident3) is recalculated on each user access to the user's personal data.

**12.** A method according to any preceding claim, wherein the first identifier (id1) and/or the third derived identity (ident3) and/or the static identity (idi) is/are generated by an identification medium (2) held by the individual and containing biometric data of the individual.

**13.** A method according to claim 12, wherein the first identifier (id1) and/or the third derived identity (ident3) and/or the static identity (idi) is/are stored in the identification medium.

**14.** A method according to claim 12 or claim 13, further including a step during which the identity of the user is verified by acquiring biometric data of the user and comparing it with the biometric data stored in the identification medium.

Fig. 1

Fig. 2

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 03065169 A